# EUROPÄISCHE PATENTSCHRIFT

(11) **EP 2 921 365 B1**
(45) Veröffentlichungstag und Bekanntmachung des Hinweises auf die Patenterteilung: **23.09.2020**
(21) Anmeldenummer: 15000456.2
(22) Anmeldetag: 16.02.2015
(51) Int. Cl.: B60W 50/14, B60W 30/095, G08G 1/16, B60Q 9/00, B60W 30/08, B60W 30/16, B60W 50/08

(54) **Vorrichtung und Verfahren zum Verhindern der Ausgabe von Kollisionswarnungen und/oder Abstandswarnungen, insbesondere während eines Abschleppvorgangs, sowie Fahrzeug**
Device and method for preventing the output of collision warnings and/or distance warnings, in particular during a towing procedure, and vehicle
Dispositif et procédé destinés à empêcher l'émission d'avertissements de collision et/ou d'avertissements de distance, en particulier pendant un remorquage, et véhicule

(30) Priorität: 12.03.2014 DE 102014003255
(43) Veröffentlichungstag der Anmeldung: 23.09.2015
(73) Patentinhaber: WABCO GmbH, 30453 Hannover (DE)
(72) Erfinder: Baum, Mathias, 30455 Hannover (DE); Deblitz, Michaela, 31275 Lehrte (DE)

(56) Entgegenhaltungen:
- DE-A1-102007 029 032
- US-A1- 2013 300 551
- US-B1- 6 225 918

## Beschreibung

Vorrichtung und Verfahren zum Verhindern der Ausgabe von Kollisionswarnungen und/oder Abstandswarnungen, insbesondere während eines Abschleppvorgangs, sowie Fahrzeug.

Die Erfindung betrifft ein Verfahren zum Verhindern der Ausgabe von Kollisionswarnungen und/oder Abstandswarnungen sowie eine Vorrichtung zur Verhinderung der Ausgabe von Kollisionswarnungen und/oder Abstandswarnungen, insbesondere während des Abschleppvorgangs, sowie ein Fahrzeug.

Es sind in Kraftfahrzeuge integrierte Systeme bekannt, die Abstands- und/oder Kollisionswarnungen für den Fahrer des Kraftfahrzeugs ausgeben. Derartige Abstands- und/oder Kollisionswarnungen werden z.B. dann ausgegeben, wenn sich das Kraftfahrzeug, z.B. aus Unachtsamkeit des Fahrers oder aufgrund komplexer Verkehrssituationen, einem vorausfahrenden Kraftfahrzeug mit einer derartigen Geschwindigkeit nähert, dass die Gefahr eines Unfalls droht. Abstands- und/oder Kollisionswarnungen werden z.B. als optische akustische oder haptische Signale im Fahrgastraum ausgegeben.

Derartige Systeme sind als Abstandswarnungs- oder Kollisionswarnungssysteme bekannt und üblicherweise als Teilfunktionen von Abstandsregeltempomaten oder Notbremssystemen realisiert. Bei Abstandsregeltempomaten oder Notbremssystemen eines Kraftfahrzeugs ist als Teil dieser Systeme, insbesondere im Frontbereich des Kraftfahrzeugs, ein Aktor-Sensor-System, z.B. in Form einer Radareinrichtung, integriert. Mit dem Aktor-Sensor-System wird dann insbesondere der Abstand zum vorausfahrenden Kraftfahrzeug gemessen und im Falle eines aufgrund der Geschwindigkeit unfallgefährlichen Abstands, bei aktiviertem Abstandsregeltempomat oder aktiviertem Notbremssystem direkt in die Fahrzeugbewegung eingegriffen.

Im Gegensatz zu den Abstandsregeltempomaten oder Notbremssystemen selbst sind die Abstandswarnungs- oder Kollisionswarnungssysteme nicht abschaltbar und nach dem Einschalten des Motors ab einem vordefinierten Geschwindigkeitswert automatisch aktiviert.

Daher ergibt sich ein technisches Problem, wenn Fahrzeuge mit Abstands- und/oder Kollisionswarnungssystemen abgeschleppt werden müssen. Beim Abschleppvorgang muss der Motor üblicherweise laufen, damit das abgeschleppte Kraftfahrzeug gelenkt werden kann. Moderne Fahrzeuge weisen eine Lenkunterstützung auf, die ein Lenken bei laufendem Motor zwar erleichtert, aber bei abgeschaltetem Motor ein Lenken des Kraftfahrzeugs erschwert bzw. sogar gar nicht möglich macht. Wie bereits oben geschildert, wird gemäß dem Stand der Technik, bei laufendem Motor auch das Abstands- und/oder Kollisionswarnungssystem ab einem bestimmten Geschwindigkeitswert aktiviert.

Das Abschleppfahrzeug fährt beim Abschleppvorgang üblicherweise in einem Abstand von einigen Zentimetern bis etwa fünf Metern, je nach Abschleppseil- oder Abschleppstangenlänge vor dem abgeschleppten Kraftfahrzeug. Dieser Abstand zwischen dem Abschleppfahrzeug und dem abgeschleppten Kraftfahrzeug führt dazu, dass ständig Kollisionswarnungen und/oder Abstandswarnungen vom abgeschleppten Kraftfahrzeug an dessen Fahrer ausgegeben werden.

Diese Kollisionswarnungen und/oder Abstandswarnungen beeinträchtigen einerseits den Komfort des Fahrers des abgeschleppten Kraftfahrzeugs, können andererseits jedoch sogar dazu führen, dass der Fahrer durch die Kollisionswarnungen und/oder Abstandswarnungen derart abgelenkt ist, dass neue Unfallgefahren entstehen können.

Die US6225918B1 beschreibt ein Fahrzeug mit einem Anhänger, wobei an dem Fahrzeug bei angekuppeltem Anhänger das rückwärtige Einparkhilfesystem ausgeschaltet wird und dafür ein rückwärtiges Einparkhilfesystem am Anhänger aktiviert wird.

Die US20130300551A1 offenbart ein Objektnäherungswarnsystem für ein Objektnetzwerk umfassend ein Objektmodul mit einer Datenverarbeitungseinheit; eine GPS-Einheit; und einen Transceiver, wobei beide mit der Datenverarbeitungseinheit verbunden sind. Ein erstes Objekt im Netzwerk weist das Modul auf, so dass die Datenverarbeitungseinheit erste Objektpositionsdaten von der GPS-Einheit erhält, die Geschwindigkeit des Objekts berechnet und Positionsdaten unter Verwendung des Transceivers an andere Netzwerkobjekte überträgt, die Datenverarbeitungseinheit berechnet die jeweiligen Positionen des ersten Objekts mit den Objekten in dem Netzwerk basierend auf den Daten und vergleicht die Positionsdaten mit einem voreingestellten Zielabstand zwischen dem ersten Objekt und den anderen Objekten. Für den Fall, dass eine Abstandsentfernung zwischen dem ersten Objekt und einem anderen Objekt im Netzwerk geringer ist als die Zielabstandsentfernung, erzeugt die Datenverarbeitungseinheit in mindestens dem ersten Objekt einen Alarm. Weiterhin wird ein sogenannter Abschleppmodus zwischen einem ersten Objekt bzw. abschleppenden Fahrzeug und einem zweiten Objekt bzw. abgeschlepptem Fahrzeug offenbart, wobei der Motor des abgeschleppten Fahrzeugs ausgeschaltet ist und das Objektnäherungswarnsystem des abschleppenden Fahrzeugs abgeschaltet wird, um keine Fehlalarme in dem Abschleppmodus des Objektnäherungswarnsystem mit dem abgeschleppten Fahrzeug zu erzeugen.

Die DE102007029032A offenbart ein Bedienkonzept, bei dem Fahrerassistenzsysteme in Systemgruppen bedient werden, die durch Schutzringe beschrieben werden. Jedem Schutzring sind bestimmte Fahrerassistenzsysteme zugeordnet. Einzelne Schutzringe, die unter anderem Kollisionswarnungen enthalten, können durch den Fahrer abgeschaltet werden.

Die Aufgabe der vorliegenden Erfindung ist es daher, während eines Abschleppvorgangs die Ausgabe von Kollisionswarnungen und/oder Abstandswarnungen zu verhindern.

Die Erfindung löst diese Aufgabe durch eine Vorrichtung zur Verhinderung der Ausgabe von Kollisionswarnungen und/oder Abstandswarnungen nach Anspruch 1 sowie ein Verfahren zum Verhindern der Ausgabe von Kollisionswarnungen und/oder Abstandswarnungen nach Anspruch 6 sowie ein Fahrzeug nach Anspruch 9.

Die Erfindung umfasst dazu ein Schaltmittel, welches einen ersten und einen zweiten Zustand umfasst. Im ersten Zustand erlaubt das Schaltmittel die Ausgabe von Kollisions- und/oder Abstandswarnungen bei Kraftfahrzeugen mit Kollisionswarnungsausgabemitteln und/oder Abstandswarnungsausgabemitteln. Im zweiten Zustand verhindert, unterdrückt und/oder schaltet das Schaltmittel Kollisions- und/oder Abstandswarnungen.

Ferner weist die Erfindung ein Betätigungsmittel auf. Mit dem Betätigungsmittel wird das Schaltmittel durch manuelle Betätigung des Betätigungsmittels vom ersten in den zweiten Zustand und vom zweiten in den ersten Zustand überführt.

Gemäß dem erfindungsgemäßen Verfahren wird bei einem Schaltschritt in Abhängigkeit von der Betätigung des Betätigungsmittels die Ausgabe von Kollisions- und/oder Abstandswarnungen mit dem Schaltmittel in dem ersten Zustand erlaubt und in dem zweiten Zustand verhindert.

Dank der Erfindung kann die Ausgabe von Kollisionswarnungen und/oder Abstandswarnungen während des Abschleppvorgangs verhindert bzw. abgeschaltet werden, um so den Komfort des Fahrers des abgeschleppten Fahrzeugs zu erhöhen.

Gemäß einem ersten Ausführungsbeispiel ist das Betätigungsmittel ein manueller Schalter oder Taster, insbesondere ein Kippschalter, ein Wippschalter, ein Druckschalter, ein Rastschalter, ein Schiebeschalter, ein Drehschalter ein Stufenschalter oder ein Tastschalter.

Mit einem als Schalter oder Taster ausgebildeten Betätigungsmittel ist es vorteilhafterweise möglich, das Schaltmittel auf einfache Weise vom ersten in den zweiten oder vom zweiten in den ersten Zustand zu überführen.

Gemäß einem weiteren Ausführungsbeispiel weist das Betätigungsmittel ein Symbol oder einen Schriftzug auf. Dieses Symbol und dieser Schriftzug sind derart gestaltet, sodass sie auf einen Abschleppvorgang hinweisen.

Mit dem Symbol oder dem Schriftzug wird sicher gestellt, dass der Fahrer des Kraftfahrzeugs sich über die Funktion des Betätigungsmittels bewusst ist und dieses nicht mit anderen z.B. im Fahrgastraum befindenden Schaltern oder Tastern verwechselt. Einem versehentlichen Abschalten von Kollisionswarnungen und/oder Abstandswarnungen wird damit entgegengewirkt.

Gemäß einem weiteren Ausführungsbeispiel weist die Vorrichtung ein Rückstellmittel und das Verfahren einen Rückstellschritt auf. Mit dem Rückstellmittel bzw. im Rückstellschritt wird beim Ein- und/oder Abschalten der Zündung des Kraftfahrzeugs das Schaltmittel, im Falle, dass sich dieses im zweiten Zustand befindet, in den ersten Zustand überführt.

Vorteilhafterweise wird somit ein Schaltmittel, dass sich im zweiten Zustand befindet und daher Kollisionswarnungen und/oder Abstandswarnungen verhindert, automatisch in den ersten Zustand überführt, wenn das Kraftfahrzeug nach einem Abschleppvorgang abgestellt und/oder erneut gestartet wird. Damit wird sichergestellt, dass nach Beenden des Abschleppvorgangs die Kollisionswarnungen und/oder Abstandswarnungen nicht mehr verhindert werden. Hierbei wird ausgenutzt, dass nach Beenden eines Abschleppvorgangs das abgeschleppte Fahrzeug üblicherweise abgestellt und/oder erneut gestartet wird. Ferner wird auch ein versehentlich in den zweiten Zustand überführtes Schaltmittel, bei jedem neuen Starten des Motors des Kraftfahrzeugs automatisch in den ersten Zustand überführt.

Die Erfindung weist außerdem eine Kopplung des Schaltmittels mit der Warnblinkanlage des Fahrzeugs, insbesondere über ein Steuergerät des Fahrzeugs, auf. Die Kopplung ist z.B. eine elektrische Verbindung und/oder eine Verbindung über eine Signalleitung. Die Kopplung dient dazu die Warnblinkanlage im zweiten Zustand und/oder beim Umschalten des Schaltmittels vom ersten Zustand in den zweiten Zustand zu aktivieren. Demnach wird also die Warnblinkanlage aktiviert, wenn das Schaltmittel im zweiten Zustand ist und/oder beim Umschalten des Schaltmittels vom ersten Zustand in den zweiten Zustand. Die Warnblinkanlage wird demnach "automatisch" aktiviert, sobald die Kollisionswarnungsausgabemittel und/oder Abstandswarnungsausgabemittel verhindert bzw. unterdrückt werden, wenn also ein Abschleppvorgang erfolgen soll. Der Vorteil besteht in einem Sicherheitsgewinn für den Abschleppvorgang, welcher vorzugsweise immer mit einer aktivierten Warnblinkanlage durchgeführt werden sollte. Dies ist vorteilhaft automatisch und ohne zusätzliche Fahrerbetätigung eines weiteren Schalters möglich.

Gemäß einem weiteren Ausführungsbeispiel weist die Erfindung ein optisches Anzeigemittel bzw. einen optischen Anzeigeschritt und/oder ein Anzeigeansteuerschritt bzw. ein Anzeigeansteuermittel auf. Mit dem Anzeigeschritt bzw. dem Anzeigemittel wird ein optisches Signal im Fahrzeuginnenraum ausgegeben und mit dem Anzeigeansteuerschritt bzw. dem Anzeigeansteuermittel eine Anzeige derart angesteuert, dass diese ein optisches Signal ausgibt. Das Anzeigemittel bzw. der Anzeigeschritt und der Anzeigeansteuerschritt bzw. das Anzeigeansteuermittel sind jedoch derart ausgebildet, das optische Signal ausschließlich auszugeben bzw. die Anzeige ausschließlich dann derart anzusteuern, dass diese ein optisches Signal ausgibt, wenn sich das Schaltmittel im zweiten Zustand befindet.

Somit wird dem Fahrer vorteilhafterweise signalisiert, dass sich das Schaltmittel im zweiten Zustand befindet, also Kollisionswarnungen und/oder Abstandswarnungen verhindert werden. Ein Fahrer, der das Betätigungsmittel während oder vor der normalen Fahrt versehentlich betätigt hat und somit das Schaltmittel in den zweiten Zustand überführt hat, wird also darauf hingewiesen das Betätigungsmittel erneut zu betätigen, damit die Kollisionswarnungen und/oder Abstandswarnungen nicht mehr verhindert werden. Bei dem Kraftfahrzeug handelt es sich vorzugsweise um ein Nutzfahrzeug. Ebenso ist das vorausfahrende Fahrzeug vorzugsweise ein Nutzfahrzeug.

Weitere Ausführungsformen der Erfindung ergeben sich aus den Unteransprüchen sowie aus den anhand der Zeichnungen näher erläuterten Ausführungsbeispielen. In den Zeichnungen zeigen:
- Fig. 1: ein Ausführungsbeispiel der Erfindung,
- Fig. 2: eine Abschleppsituation,
- Fig. 3: mehrere Betätigungsmittel und
- Fig. 4: einen Ausschnitt eines Ablaufs eines Ausführungsbeispiels.

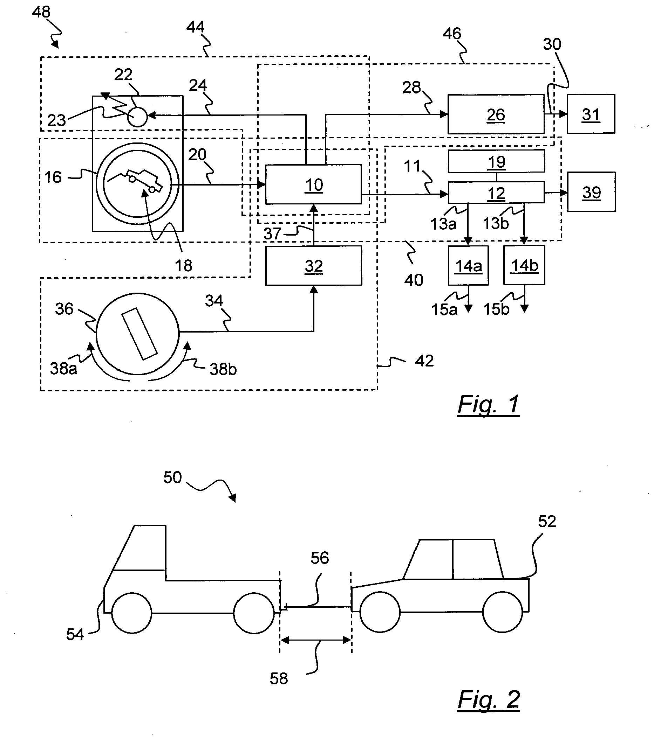

Fig. 1 zeigt zunächst ein Ausführungsbeispiel der Vorrichtung zur Verhinderung der Ausgabe von Kollisionswarnungen und/oder Abstandswarnungen. Die Vorrichtung weist ein Schaltmittel 10 auf. Das Schaltmittel 10 ist derart ausgebildet, um einen ersten und einen zweiten Zustand einzunehmen. Ferner weist das Schaltmittel 10 eine Signalleitung 11 zu einem Steuergerät 12 des Fahrzeugs auf, das insbesondere auch einen Abstandsregeltempomaten steuert.

Im ersten Zustand wird in dem Schaltmittel 10 ein erstes Signal erzeugt und über die Signalleitung 11 an das Steuergerät 12 übermittelt, wobei das Signal das Steuergerät 12 anweist, Kollisions- und/oder Abstandswarnungen von Kollisionswarnungsausgabemitteln und/oder Abstandswarnungsausgabemitteln des Abstandsregeltempomaten zu erlauben. Das Steuergerät 12 ist dazu über die Ausgänge 13a, 13b mit Kollisionswarnungsausgabemitteln 14a und Abstandswarnungsausgabemitteln 14b verbunden. Mit den Kollisionswarnungsausgabemitteln 14a werden also im Falle der Gefahr einer Kollision Kollisionswarnungen 15a und im Falle der Gefahr von gefährlichen Abständen, z.B. zwischen dem Fahrzeug und einem vorausfahrenden Fahrzeug, mit den Abstandswarnungsausgabemitteln 14b Abstandswarnungen 15b ausgegeben.

Im zweiten Zustand wird in dem Schaltmittel 10 ein anderes als das erste Signal erzeugt und über die Signalleitung 11 an das Steuergerät 12 übermittelt, wobei das Signal nun das Steuergerät 12 anweist Kollisions- und/oder Abstandswarnungen 15a, 15b zu unterdrücken bzw. zu verhindern, also nicht mit den Abstandswarnungsausgabemitteln 14b des Abstandsregeltempomaten auszugeben.

Ferner weist die Vorrichtung ein Betätigungsmittel 16 auf. Das Betätigungsmittel 16 ist ein manueller Tastschalter 16, der ein Symbol 18 aufweist. Das Symbol 18 zeigt ein Fahrzeug an einem Abschlepphaken und weist damit auf einen Abschleppvorgang hin. Das Betätigungsmittel 16 ist über eine weitere Signalleitung 20 mit dem Schaltmittel 10 verbunden. Durch Betätigung des Betätigungsmittels 16, also durch Drücken des Tastschalters 16, wird das Schaltmittel 10 von einem ersten Zustand in einen zweiten Zustand oder von einem zweiten in einen ersten Zustand überführt.

Außerdem ist das Schaltmittel 10 über das Steuergerät 12 mit der Warnblinkanlage 19 des Fahrzeugs gekoppelt, also z.B. elektrisch und/oder über eine Signalleitung verbunden. Die Warnblinkanlage 19 wird im zweiten Zustand und/oder beim Umschalten des Schaltmittels 10 vom ersten Zustand in den zweiten Zustand über das Steuergerät aktiviert. Somit wird die Warnblinkanlage 19 gleichzeitig aktiviert, wenn Kollisions- und/oder Abstandswarnungen 15a, 15b unterdrückt bzw. verhindern werden, wenn also ein Abschleppvorgang stattfinden soll. Im Falle, dass bei dem Abschleppvorgang die Warnblinkanlage 19 nicht aktiviert werden soll, so kann die Warnblinkanlage 19 durch Betätigen eines hier nicht dargestellten Ein- und Ausschalters der Warnblinkanlage 19 wieder deaktiviert werden, nachdem diese durch das Schaltmittel 10 bzw. das Steuergerät 12 aktiviert wurde. Die Deaktivierung der Warnblinkanlage 19 kann durch einfaches oder mehrfaches Betätigen des Ein- und Ausschalters der Warnblinkanlage 19 deaktiviert werden, insbesondere nach einem Einschaltvorgang und einem folgenden Ausschaltvorgang des Ein- und Ausschalters der Warnblinkanlage 19 selbst. Damit ist kein zusätzlicher Schalter zur Deaktivierung der Warnblinkanlage 19 erforderlich, sondern es wird der üblicherweise im Fahrzeug vorhandene Ein- und Ausschalter der Warnblinkanlage 19 verwendet, obwohl diese mittels eines anderen Signals, hier durch das Signal des Umschaltens des Schaltmittels 10 vom ersten in den zweiten Zustand, aktiviert wird.

Zudem weist die Vorrichtung ein optisches Anzeigemittel 22, das hier einer Leuchtdiode entspricht, auf. Das Anzeigemittel 22 wird in diesem Ausführungsbeispiel von dem Schaltmittel 10 über eine weitere Signalleitung 24 angesteuert. Im Falle, dass sich das Schaltmittel im zweiten Zustand befindet, wird vom Anzeigemittel 22 ein optisches Signal 23 ausgegeben. Hier bedeutet ein optisches Signal 23 ausgeben, dass die Leuchtdiode aufleuchtet. Im Falle, dass sich das Schaltmittel im ersten Zustand befindet, wird vom Anzeigemittel 22 kein optisches Signal 23 ausgegeben. Die Leuchtdiode leuchtet in diesem Fall also nicht.

Außerdem weist die Vorrichtung ein Anzeigeansteuermittel 26 auf, das über eine weitere Signalleitung 28 mit dem Schaltmittel 10 verbunden ist. Das Anzeigeansteuermittel 26 weist gemäß diesem Ausführungsbeispiel einen Ausgang 30 auf. Der Ausgang 30 dient zur Ansteuerung einer Anzeige 31, die z.B. im Bereich des Geschwindigkeitsanzeigers angeordnet ist. Im Falle, dass sich das Schaltmittel 10 im ersten Zustand befindet, wird vom Anzeigeansteuermittel 26 über den Ausgang 30 die Anzeige 30 derart angesteuert, dass diese kein optisches Signal 23 ausgibt. Im Falle, dass sich das Schaltmittel 10 im zweiten Zustand befindet, wird vom Anzeigeansteuermittel 26 über den Ausgang 30 die Anzeige 30 derart angesteuert, dass diese ein optisches Signal 23 ausgibt. Ein derartiges optisches Signal 23 ist insbesondere ein Signal, dass darauf hinweist, dass Kollisions- und/oder Abstandswarnungen 15a, 15b zum gegebenen Zeitraum unterdrückt bzw. verhindert werden.

Ferner weist die Vorrichtung ein Rückstellmittel 32 auf, das über eine weitere Signalleitung 34 mit dem Zündschloss 36 des Kraftfahrzeugs und über eine weitere Signalleitung 37 mit dem Schaltmittel 10 verbunden ist. Das Zündschloss 36 dient zum Einschalten 38a und Abschalten 38b der Zündung 39 des Fahrzeugs durch drehen mit einem nicht dargestellten Zündschlüssel, wobei die Zündung 39 dazu vom Steuergerät 12 des Fahrzeugs angesteuert wird. Das Rückstellmittel 32 ist derart ausgebildet, um ein Ein- und/oder Abschalten 38a, 38b der Zündung 39 mit dem Zündschloss 36 mittels der Signalleitung 34 zu detektieren und das Schaltmittel 10, im Falle, dass sich das Schaltmittel 10 im zweiten Zustand befindet, in den ersten Zustand zu überführen, wenn ein Ein- und/oder Abschalten 38a, 38b der Zündung 39 vom Rückstellmittel 32 detektiert wird.

Ferner ist somit der Ablauf eines Schaltschritts 40 eines Ausführungsbeispiels des Verfahrens zum Verhindern der Ausgabe von Kollisionswarnungen 15a und/oder Abstandswarnungen 15b bei Kraftfahrzeugen mit Kollisionswarnungsausgabemitteln 14a und/oder Abstandswarnungsausgabemitteln 14b dargestellt. Bei dem Schaltschritt 40 wird in Abhängigkeit von der Betätigung eines Betätigungsmittels 16 die Ausgabe von Kollisions- und/oder Abstandswarnungen 15a, 15b mit einem Schaltmittel 10 in einem ersten Zustand erlaubt und in einem zweiten Zustand verhindert.

Zudem ist auch der Ablauf eines Rückstellschritts 42 dargestellt, bei dem beim Ein- und/oder Abschalten 38a, 38b der Zündung 39 des Kraftfahrzeugs mit dem Zündschloss 36 das Schaltmittel 10, im Falle, dass sich dieses im zweiten Zustand befindet, in den ersten Zustand überführt wird.

Außerdem ist der Ablauf eines Anzeigeschritts 44 und eines Anzeigeansteuerschritts 46 dargestellt, wobei bei dem Anzeigeschritt 44 ausschließlich im Falle eines sich im zweiten Zustand befindenden Schaltmittels 10 ein optisches Signal 23 ausgegeben wird und mit dem Anzeigeansteuerschritt 46 eine Anzeige 30 derart angesteuert wird, dass diese ein optisches Signal 23 im Fahrzeuginnenraum ausgibt.

Demnach zeigt Fig. 1 ein Ausführungsbeispiel der erfindungsgemäßen Vorrichtung 48, umfassend zumindest das Schaltmittel 10, das Betätigungsmittel 16, sowie das Rückstellmittel 32.

Fig. 2 zeigt eine Abschleppsituation 50, bei der ein Kraftfahrzeug 52 von einem vorausfahrenden Kraftfahrzeug 54 abgeschleppt wird. Das Kraftfahrzeug 52 wird mit einer Abschleppstange 56 durch das vorausfahrende Kraftfahrzeug 54 abgeschleppt. Das Kraftfahrzeug 52 weist ein Ausführungsbeispiel der erfindungsgemäßen Vorrichtung 48 auf, sodass trotz des geringen Abstands 58 zwischen den Kraftfahrzeugen 52, 54 keine Kollisionswarnungen 15a mit Kollisionswarnungsausgabemittel 14a und/oder von Abstandswarnungen 15b mit Abstandswarnungsausgabemittel 14b ausgegeben werden, wenn das Betätigungsmittel 16 mit dem Schaltmittel 10 in den ersten Zustand überführt wurde.

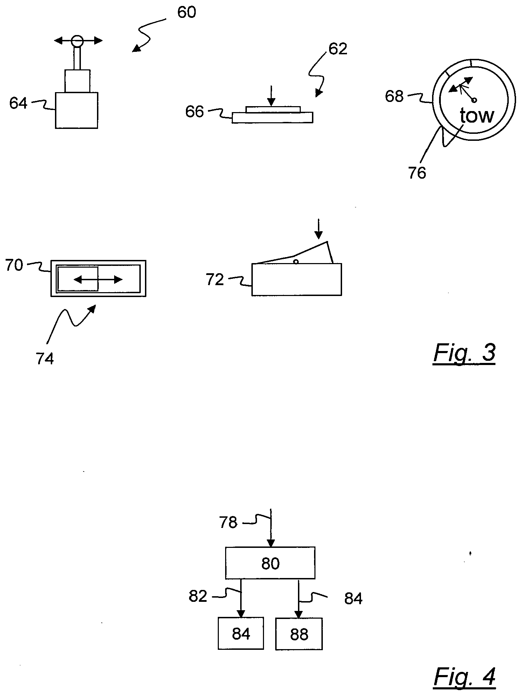

Fig. 3 zeigt mehrere Betätigungsmittel 16, die in verschiedenen Ausführungsformen der Vorrichtung 48 eingesetzt werden. Es sind Schalter 60 und Taster 62 dargestellt. Fig. 3 zeigt z.B. einen als Kippschalter 64 ausgebildeten Schalter 60 und einen als Taster 62 ausgebildeten Tastschalter 66. Ferner zeigt die Fig. 3 noch einen Drehschalter 68, einen Schiebeschalter 70 und einen Wippschalter 72. Der Schiebeschalter 72 ist ein Beispiel für einen Rastschalter 74. Der Drehschalter 68 weist zudem einen Schriftzug 76 auf, um den Fahrer auf die Funktion des Drehschalters 68 hinzuweisen.

Fig. 4 zeigt einen Ausschnitt eines Ablauf eines Ausführungsbeispiels der Erfindung in einer Gefahrensituation, in der eine Kollision droht oder eine Warnung wegen eines zu geringen Abstands 58 ausgegeben werden soll. Zunächst wird eine Kollisionswarnung 15a oder Abstandswarnung 15b erzeugt 78. Daraufhin wird geprüft 80, ob das Schaltmittel 10 im ersten Zustand oder im zweiten Zustand ist. Ist das Schaltmittel 10 im ersten Zustand 82, so werden die Kollisionswarnung 15a oder Abstandswarnung 15b ausgegeben 84. Ist das Schaltmittel 10 im zweiten Zustand 86, so werden die Kollisionswarnung 15a oder Abstandswarnung 15b nicht ausgegeben 88.

### Bezugszeichenliste (Bestandteil der Beschreibung)

- 10: Schaltmittel
- 11: Signalleitung
- 12: Steuergerät
- 13a, b: Ausgänge des Steuergeräts
- 14a: Kollisionswarnungsausgabemittel
- 14b: Abstandswarnungsausgabemittel
- 15a: Kollisionswarnungen
- 15b: Abstandswarnungen
- 16: Betätigungsmittel
- 18: Symbol
- 19: Warnblinkanlage
- 20: weitere Signalleitung
- 22: optisches Anzeigemittel
- 23: optisches Signal
- 24: weitere Signalleitung
- 26: Anzeigeansteuermittel
- 28: weitere Signalleitung
- 30: Ausgang des Anzeigeansteuermittels
- 31: Anzeige
- 32: Rückstellmittel
- 34: weitere Signalleitung
- 36: Zündschloss
- 37: weitere Signalleitung
- 38a: Einschalten der Zündung
- 38b: Abschalten der Zündung
- 39: Zündung
- 40: Schaltschritt
- 42: Rückstellschritt
- 44: Anzeigeschritt
- 46: Anzeigeansteuerschritt
- 48: Vorrichtung
- 50: Abschleppvorgang
- 52: Kraftfahrzeug
- 54: vorausfahrendes Fahrzeug
- 56: Abschleppstange
- 58: Abstand
- 60: Schalter
- 62: Taster
- 64: Kippschalter
- 66: Tastschalter
- 68: Drehschalter
- 70: Schiebeschalter
- 72: Wippschalter
- 74: Rastschalter
- 76: Schriftzug
- 78: Erzeugen einer Kollisionswarnung
- 80: oder Abstandswarnung Prüfen des Zustands
- 82: erster Zustand
- 84: Ausgeben von Kollisions- oder Abstandswarnung
- 86: zweiter Zustand
- 88: Nicht Ausgeben von Kollisions- oder Abstandswarnung

## Patentansprüche

1. Vorrichtung (48) zur Verhinderung der Ausgabe von Kollisionswarnungen (15a) und/oder Abstandswarnungen (15b) während des Abschleppvorgangs bei abgeschleppten Kraftfahrzeugen (52) mit Kollisionswarnungsausgabemitteln (14a) und/oder Abstandswarnungsausgabemitteln (14b), wobei die Vorrichtung (48) ein Schaltmittel (10) umfasst, das derart ausgebildet ist, um in einem ersten Zustand (82) die Ausgabe von Kollisions- und/oder Abstandswarnungen (15a, 15b) zu erlauben und in einem zweiten Zustand (86) Kollisions- und/oder Abstandswarnungen (15a, 15b) zu verhindern, und die Vorrichtung (48) ein Betätigungsmittel (16) aufweist, wobei das Betätigungsmittel (16) derart ausgebildet ist, um das Schaltmittel (10) durch manuelle Betätigung des Betätigungsmittels (16) vom ersten Zustand (82) in den zweiten Zustand (86) und vom zweiten Zustand (86) in den ersten Zustand (82) zu überführen, **dadurch gekennzeichnet, dass**
das Schaltmittel (10) mit der Warnblinkanlage (19) des Kraftfahrzeugs (52) gekoppelt ist, um die Warnblinkanlage (19) im zweiten Zustand (86) und/oder beim Umschalten des Schaltmittels (10) vom ersten Zustand (82) in den zweiten Zustand (86) zu aktivieren.

2. Vorrichtung (48) nach Anspruch 1, **dadurch gekennzeichnet, dass**
das Betätigungsmittel (16) ein manueller Schalter (60) oder Taster (62), insbesondere ein Kippschalter (64), ein Wippschalter (72), ein Rastschalter (74), ein Schiebeschalter (70), ein Drehschalter (68), ein Stufenschalter oder ein Tastschalter (66), ist.

3. Vorrichtung (48) nach Anspruch 1 oder 2, **dadurch gekennzeichnet, dass**
das Betätigungsmittel (16) ein Symbol (18) oder einen Schriftzug (76) aufweist, das bzw. der auf einen Abschleppvorgang (50) hinweist.

4. Vorrichtung (48) nach einem der vorhergehenden Ansprüche, **dadurch gekennzeichnet, dass**
die Vorrichtung (48) ein Rückstellmittel (32) aufweist, wobei das Rückstellmittel (32) derart ausgebildet ist, um beim Einschalten (38a) und/oder Abschalten (38b) der Zündung (39) des Kraftfahrzeugs (52) das Schaltmittel (10), im Falle, dass sich dieses im zweiten Zustand (86) befindet, in den ersten Zustand (82) zu überführen.

5. Vorrichtung (48) nach einem der vorhergehenden Ansprüche, **dadurch gekennzeichnet, dass**
die Vorrichtung (48) ein optisches Anzeigemittel (22) und/oder ein Anzeigeansteuermittel (26) aufweist, wobei das Anzeigemittel (22) derart ausgebildet ist, um ausschließlich im Falle eines sich im zweiten Zustand (86) befindenden Schaltmittels (10) ein optisches Signal (23) im Fahrzeuginnenraum auszugeben und das Anzeigeansteuermittel (26) derart ausgebildet ist, um ausschließlich im Falle eines sich im zweiten Zustand (86) befindenden Schaltmittels (10) eine Anzeige (31) im Fahrzeuginnenraum derart anzusteuern, dass diese ein optisches Signal (23) ausgibt.

6. Verfahren zum Verhindern der Ausgabe von Kollisionswarnungen (15a) und/oder Abstandswarnungen (15b) während des Abschleppvorgangs bei abgeschleppten Kraftfahrzeugen (52) mit Kollisionswarnungsausgabemitteln (14a) und/oder Abstandswarnungsausgabemitteln (14b), wobei das Verfahren einen Schaltschritt (40) umfasst, bei dem die Ausgabe von Kollisions- und/oder Abstandswarnungen (15a, 15b) mit einem Schaltmittel (10) in einem ersten Zustand (82) erlaubt und in einem zweiten Zustand (86) verhindert wird und das Schaltmittel (10) durch Betätigung eines Betätigungsmittels (16) vom ersten Zustand (82) in den zweiten Zustand (86) und vom zweiten Zustand (86) in den ersten Zustand (82) überführt wird, **dadurch gekennzeichnet, dass**
das Schaltmittel (10) mit der Warnblinkanlage (19) des Kraftfahrzeugs (52) gekoppelt ist, und die Warnblinkanlage (19) im zweiten Zustand (86) und/oder beim Umschalten des Schaltmittels (10) vom ersten Zustand (82) in den zweiten Zustand (86) aktiviert wird.

7. Verfahren nach Anspruch 6, **dadurch gekennzeichnet, dass**
das Verfahren einen Rückstellschritt (42) aufweist, bei dem beim Einschalten (38a) und/oder Abschalten (38b) der Zündung (39) des Kraftfahrzeugs (52) das Schaltmittel (10), im Falle, dass sich dieses im zweiten Zustand (86) befindet, in den ersten Zustand (82) überführt wird.

8. Verfahren nach Anspruch 6 oder 7 , **dadurch gekennzeichnet, dass**
das Verfahren einen optischen Anzeigeschritt (44) und/oder ein Anzeigeansteuerschritt (46) aufweist, wobei mit dem Anzeigeschritt (44) ausschließlich im Falle eines sich im zweiten Zustand (86) befindenden Schaltmittels (10) ein optisches Signal (23) mit einem Anzeigemittel (22) und mit dem Anzeigeansteuerschritt (46) ausschließlich im Falle eines sich im zweiten Zustand (86) befindenden Schaltmittels (10) eine Anzeige (31) derart angesteuert wird, dass diese ein optisches Signal (23) im Fahrzeuginnenraum ausgibt.

9. Fahrzeug (52), insbesondere Nutzfahrzeug, mit einer Vorrichtung (48) nach einem der Ansprüche 1 bis 5 zur Durchführung des Verfahrens nach einem der Ansprüche 6 bis 8.

## Claims

1. Device (48) for preventing the output of collision warnings (15a) and/or distance warnings (15b) during the towing procedure in the case of towed motor vehicles (52) with collision warning output means (14a) and/or distance warning output means (14b), wherein the device (48) comprises a switching means (10), which is designed in such a way as to allow the output of collision and/or distance warnings (15a, 15b) in a first state (82) and to prevent collision and/or distance warnings (15a, 15b) in a second state (86), and the device (48) has an actuating means (16), wherein the actuating means (16) is designed in such a way as to transfer the switching means (10) from the first state (82) into the second state (86) and from the second state (86) into the first state (82) by manual actuation of the actuating means (16), **characterized in that**
the switching means (10) is coupled to the hazard warning system (19) of the motor vehicle (52), in order to activate the hazard warning system (19) in the second state (86) and/or when switching over the switching means (10) from the first state (82) into the second state (86).

2. Device (48) according to Claim 1, **characterized in that**
the actuating means (16) is a manual switch (60) or pushbutton (62), in particular a toggle switch (64), a rocker switch (72), a detent switch (74), a slide switch (70), a rotary switch (68), a step switch or a pushbutton switch (66).

3. Device (48) according to Claim 1 or 2, **characterized in that**
the actuating means (16) has a symbol (18) or an inscription (76), which draws attention to a towing procedure (50).

4. Device (48) according to one of the preceding claims, **characterized in that**
the device (48) has a resetting means (32), wherein the resetting means (32) is designed in such a way as to transfer the switching means (10) into the first state (82) if it is in the second state (86) when switching on (38a) and/or switching off (38b) the ignition (39) of the motor vehicle (52).

5. Device (48) according to one of the preceding claims, **characterized in that**
the device (48) has an optical indicating means (22) and/or an indication activating means (26), wherein the indicating means (22) is designed in such a way as to output an optical signal (23) in the interior of the vehicle only if a switching means (10) is in the second state (86) and the indication activating means (26) is designed in such a way as to activate an indication (31) in the interior of the vehicle in such a way that it outputs an optical signal (23) only if a switching means (10) is in the second state (86) .

6. Method for preventing the output of collision warnings (15a) and/or distance warnings (15b) during the towing procedure in the case of towed motor vehicles (52) with collision warning output means (14a) and/or distance warning output means (14b), wherein the method comprises a switching step (40), in which the output of collision and/or distance warnings (15a, 15b) is allowed in a first state (82) and is prevented in a second state (86) by a switching means (10), and the switching means (10) is transferred from the first state (82) into the second state (86) and from the second state (86) into the first state (82) by actuation of an actuating means (16), **characterized in that**
the switching means (10) is coupled to the hazard warning system (19) of the motor vehicle (52), and the hazard warning system (19) is activated in the second state (86) and/or when switching over the switching means (10) from the first state (82) into the second state (86).

7. Method according to Claim 6, **characterized in that**
the method has a resetting step (42), in which the switching means (10) is transferred into the first state (82) if it is in the second state (86) when switching on (38a) and/or switching off (38b) the ignition (39) of the motor vehicle (52).

8. Method according to Claim 6 or 7, **characterized in that**
the method has an optical indicating step (44) and/or an indication activating step (46), wherein, with the indicating step (44), an optical signal (23) by an indicating means (22) only if a switching means (10) is in the second state (86) and, with the indication activating step (46), an indication (31) is activated in such a way that it outputs an optical signal (23) in the interior of the vehicle only if a switching means (10) is in the second state (86).

9. Vehicle (52), in particular a commercial vehicle, with a device (48) according to one of Claims 1 to 5 for carrying out the method according to one of Claims 6 to 8.

## Revendications

1. Dispositif (48) pour empêcher la délivrance d'alertes de collision (15a) et/ou d'alertes de distance (15b) pendant l'opération de remorquage avec des véhicules automobiles (52) remorqués munis de moyens de délivrance d'alerte de collision (14a) et/ou de moyens de délivrance d'alerte de distance (14b), le dispositif (48) comportant un moyen de commutation (10) qui est configuré de manière à autoriser la délivrance d'alertes de collision et/ou de distance (15a, 15b) dans un premier état (82) et à empêcher la délivrance d'alertes de collision et/ou de distance (15a, 15b) dans un deuxième état (86), et le dispositif (48) possédant un moyen d'actionnement (16), le moyen d'actionnement (16) étant configuré de manière à transférer le moyen de commutation (10) du premier état (82) dans le deuxième état (86) et du deuxième état (86) dans le premier état (82) par actionnement manuel du moyen d'actionnement (16), **caractérisé en ce que**
le moyen de commutation (10) est couplé aux feux de détresse (19) du véhicule automobile (52) afin d'activer les feux de détresse (19) dans le deuxième état (86) et/ou lors du basculement du moyen de commutation (10) du premier état (82) dans le deuxième état (86).

2. Dispositif (48) selon la revendication 1, **caractérisé en ce que** le moyen d'actionnement (16) est un commutateur (60) ou un poussoir (62) manuel, notamment un commutateur à levier (64), un commutateur à bascule (72), un commutateur à enclenchement (74), un commutateur à curseur (70), un commutateur rotatif (68), un commutateur à gradins ou un commutateur à poussoir (66).

3. Dispositif (48) selon la revendication 1 ou 2, **caractérisé en ce que** le moyen d'actionnement (16) possède un symbole (18) ou une inscription (76) qui notifie d'une opération de remorquage (50).

4. Dispositif (48) selon l'une des revendications précédentes, **caractérisé en ce que** le dispositif (48) possède un moyen de rappel (32), le moyen de rappel (32) étant configuré de manière à, lors de la mise en circuit (38a) et/ou la mise hors circuit (38b) de l'allumage (39) du véhicule automobile (52), transférer le moyen de commutation (10) dans le premier état (82), dans le cas où celui-ci se trouve dans le deuxième état (86).

5. Dispositif (48) selon l'une des revendications précédentes, **caractérisé en ce que** le dispositif (48) possède un moyen d'affichage (22) optique et/ou un moyen de commande d'affichage (26), le moyen d'affichage (22) étant configuré de manière à délivrer un signal optique (23) dans l'habitacle du véhicule uniquement dans le cas d'un moyen de commutation (10) qui se trouve dans le deuxième état (86) et le moyen de commande d'affichage (26) étant configuré de manière à, uniquement dans le cas d'un moyen de commutation (10) qui se trouve dans le deuxième état (86), commander un afficheur (31) dans l'habitacle du véhicule de telle sorte que celui-ci délivre un signal optique (23).

6. Procédé pour empêcher la délivrance d'alertes de collision (15a) et/ou d'alertes de distance (15b) pendant l'opération de remorquage avec des véhicules automobiles (52) remorqués munis de moyens de délivrance d'alerte de collision (14a) et/ou de moyens de délivrance d'alerte de distance (14b), le procédé comprenant une étape de commutation (40) lors de laquelle la délivrance d'alertes de collision et/ou de distance (15a, 15b) est autorisée avec un moyen de commutation (10) dans un premier état (82) et empêchée dans un deuxième état (86), et le moyen de commutation (10) étant transféré du premier état (82) dans le deuxième état (86) et du deuxième état (86) dans le premier état (82) par actionnement d'un moyen d'actionnement (16), **caractérisé en ce que** le moyen de commutation (10) est couplé aux feux de détresse (19) du véhicule automobile (52) et les feux de détresse (19) sont activés dans le deuxième état (86) et/ou lors du basculement du moyen de commutation (10) du premier état (82) dans le deuxième état (86).

7. Procédé selon la revendication 6, **caractérisé en ce que** le procédé comprend une étape de rappel (42), lors de laquelle le moyen de commutation (10), dans le cas où celui-ci se trouve dans le deuxième état (86), est transféré dans le premier état (82) lors de la mise en circuit (38a) et/ou la mise hors circuit (38b) de l'allumage (39) du véhicule automobile (52).

8. Procédé selon la revendication 6 ou 7, **caractérisé en ce que** le procédé comprend une étape d'affichage (44) optique et/ou une étape de commande d'affichage (46), un signal optique (23) avec un moyen d'affichage (22) avec l'étape d'affichage (44) uniquement dans le cas d'un moyen de commutation (10) qui se trouve dans le deuxième état (86) et un afficheur (31) est commandé avec l'étape de commande d'affichage (46) uniquement dans le cas d'un moyen de commutation (10) qui se trouve dans le deuxième état (86), de telle sorte que celui-ci délivre un signal optique (23) dans l'habitacle du véhicule.

9. Véhicule (52), notamment véhicule utilitaire, comprenant un dispositif (48) selon l'une des revendications 1 à 5 destiné à mettre en œuvre le procédé selon l'une des revendications 6 à 8.
